# EUROPEAN PATENT APPLICATION

(11) **EP 1 746 553 A2**
(43) Date of publication of application: **24.01.2007**
(21) Application number: 06001329.9
(22) Date of filing: 23.01.2006
(51) Int. Cl.: G08C 17/00

(54) **Home networking system using self-moving robot**

(30) Priority: 22.07.2005 KR 2005066980
(71) Applicant: LG Electronics Inc., Yeongdeungpo-Gu Seoul (KR)
(72) Inventor: Woo, Chun-kyu, Bupyeong-gu, Incheon (KR)
(74) Representative: Vossius & Partner

(57) **Abstract**

A home networking system using a self-moving robot is provided. The self-moving robot and household devices connected via a network can be wirelessly controlled indoors or outdoors. The self-moving robot receives an operating command transmitted from a wireless operating unit, transmits information, indicating whether or not the command has been received, to the operating unit, executes a task corresponding to the command, and outputs a control signal to an accessible household device. Each signal transmission device is driven according to a drive signal transmitted within a specific range from the robot, transmits its state information including identification information to the robot when driven, and transmits a direction change signal for the robot in a specific direction. The operating unit displays the command reception information and/or state information of the signal transmission device transmitted from the self-moving robot and outputs a control signal to an accessible household device through the robot.

## Description

The present invention relates to a self-moving robot, and more particularly to a technology for wirelessly controlling a self-moving robot and a plurality of external devices connected thereto via a network from indoor or outdoor locations.

Robots have been developed for industrial purposes and used as part of factory automation. Robots also have been used, in place of human beings, to collect information in extreme environments that human beings cannot access. Robot technologies have been rapidly developed as applied to the most advanced space development industries. Recently, even human-friendly household robots have been developed. A typical example of the human-friendly household robot is a self-moving cleaning robot.

The self-moving cleaning robot is a device that sucks up dust or other foreign particles while automatically moving within a specific cleaning area as in a residence or office. In addition to the components of a general vacuum cleaner that sucks up dust or other foreign particles, the self-moving cleaning robot includes a movement unit including left and right wheel motors for moving the cleaning robot, a number of detection sensors for detecting a variety of obstacles so that the robot moves without colliding with obstacles in the cleaning area, and a microprocessor for controlling the overall operation of the robot.

The conventional self-moving robot is driven according to a control signal transmitted from a remote controller that is provided together with the self-moving robot. A plurality of signal transmission devices is used to prevent the self-moving robot from exiting a predetermined area.

Along with the rapid development of the industry, home networking has been introduced to utilize the residence as more than a simple living place and to allow the user to easily perform a series of actions in the residence using a computer and communication technologies. Simply stated, home networking is a technology for automating control and management of devices for electricity, water, heating, locking, etc., at home using a computer and electronic communication technologies. Home networking has been developed aiming at controlling a variety of devices in a residence using a single terminal from indoor or outdoor locations. Such devices, connected via a LAN established using a computer and cables and also connected over the Internet, have already been commercialized.

However, when a computer based LAN is used, a variety of household devices (also referred to as external devices) must be connected to a computer that controls the devices, so that high installation costs and a long time are required to establish the network. The network also has poor scalability since a new connection must be installed for each device added to the network.

Therefore, the present invention has been made in view of the above problems, and it is an object of the present invention to provide a self-moving robot control system whereby a self-moving robot and a number of external devices connected thereto can be controlled using a single wireless operating unit without the need to establish a separate network.

It is another object of the present invention to provide a self-moving robot control system whereby a self-moving robot can collect and provide state information of a signal transmission device and environment information of an area where the signal transmission device is installed to a user through two-way communication.

It is yet another object of the present invention to provide a self-moving robot control system whereby a self-moving robot and a number of external devices can be controlled from remote locations.

In accordance with one aspect of the present invention, the above and other objects can be accomplished by the provision of a home networking system using a self-moving robot, the home networking system comprising at least one external device; a self-moving robot for executing a task corresponding to a wirelessly received operating command, transmitting a drive signal within a specific range, and outputting a control signal to an accessible external device; a wireless operating unit for wirelessly transmitting an operating command input by a user to the self-moving robot, and outputting a control signal for controlling an accessible external device to the accessible external device, accessibility information of the accessible external device being provided from the self-moving robot; and a plurality of signal transmission devices, each of which detects a drive signal transmitted from the self-moving robot, and is driven according to the drive signal, transmits state information including identification information of the signal transmission device to the self-moving robot when the signal transmission device is driven, and transmits a direction change signal for the self-moving robot in a specific direction.

In this home networking system, external devices, which the self-moving robot can access through a wireless network, can be controlled using the single wireless operating unit, which is provided together with the self-moving robot, without installation of any separate connection.

In accordance with another aspect of the present invention, there is provided a home networking system using a self-moving robot, the home networking system comprising at least one external device; a self-moving robot for executing a task corresponding to a wirelessly received operating command, transmitting a drive signal within a specific range, and outputting a control signal to an accessible external device; a host device connected to a user terminal through a Public Switched Telephone Network (PSTN), the host device transmitting an operating command input through the user terminal to the self-moving robot, and transmitting information received from the self-moving robot, which indicates whether or not the operating command has been received, to the user terminal; and a plurality of signal transmission devices, each of which detects a drive signal transmitted from the self-moving robot, and is driven according to the drive signal, transmits state information including identification information of the signal transmission device to the self-moving robot when the signal transmission device is driven, and transmits a direction change signal for the self-moving robot in a specific direction.

In this home network system, the user can control a self-moving robot in a residence from outdoor locations using a user telephone such as a fixed-line telephone or a mobile phone (or a mobile communication terminal) or using a user terminal connected via a network such as the Internet and can also control the operation of external devices, which the self-moving robot can access through a wireless network, without installation of any separate connection.

The above and other objects, features and other advantages of the present invention will be more clearly understood from the following detailed description taken in conjunction with the accompanying drawings, in which:
FIG. 1 schematically shows a home networking system using a self-moving robot according to a preferred embodiment of the present invention;
FIG. 2 is a schematic block diagram of a cleaning robot that is an example of the self-moving robot in FIG. 1;
FIG. 3 is a schematic block diagram of a signal transmission device in FIG. 1;
FIG. 4 is a schematic block diagram of a wireless operating unit in FIG. 1;
FIG. 5 schematically shows a home networking system using a self-moving robot according to another embodiment of the present invention; and
FIG. 6 is a schematic block diagram of a host device in FIG. 5.

Now, preferred embodiments of the present invention will be described in detail with reference to the accompanying drawings so that the present invention will be easily understood and realized by those skilled in the art.

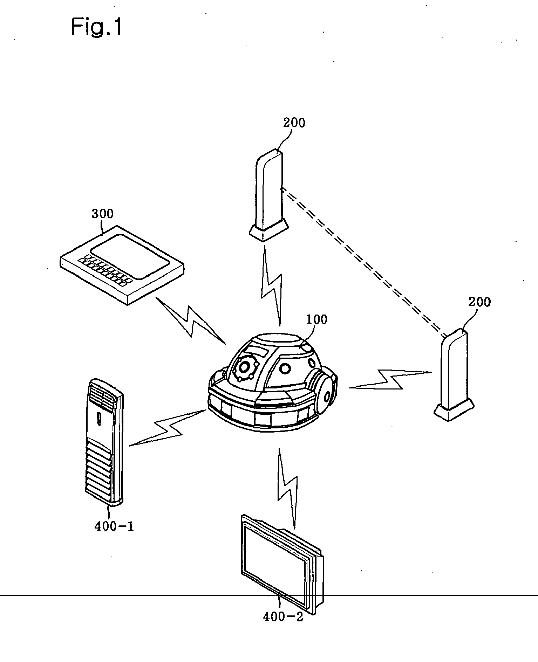

FIG. 1 schematically shows a home networking system using a self-moving robot according to a preferred embodiment of the present invention. As shown in FIG. 1, the home networking system includes a self-moving robot 100, a plurality of signal transmission devices 200, and a wireless operating unit 300. The self-moving robot 100 receives a wirelessly transmitted operating command, transmits information indicating whether or not the operating command has been received, and performs a task according to the received operating command. The self-moving robot 100 also transmits a drive signal within a specific range and outputs a control signal to an accessible external device. Each of the plurality of the signal transmission devices detects a drive signal transmitted from the self-moving robot 100 and is driven according to the drive signal. When a signal transmission device is driven, the signal transmission device transmits its state information, including identification information of the signal transmission device, to the self-moving robot 100, and transmits a direction change signal for the self-moving robot 100 in a specific direction. The wireless operating unit 300 wirelessly transmits an input operating command to the self-moving robot 100. The wireless operating unit 300 displays, to the user, information indicating whether or not the self-moving robot 100 has received an operating command and/or state information of the signal transmission device 200, which have been transmitted from the self-moving robot 100. The wireless operating unit 300 also outputs a control signal for an accessible external device, accessibility information of which is provided from the self-moving robot 100, to the accessible external device through the self-moving robot 100.

The self-moving robot 100 performs a task while automatically moving within a specific area according to an installed program. A typical commercialized example of the self-moving robot 100 is a cleaning robot that sucks up dust or other foreign particles while moving freely within a predetermined area.

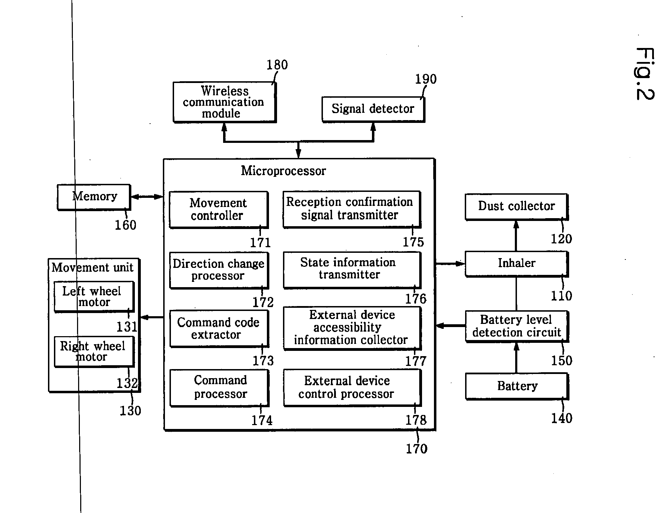

The self-moving robot 100 according to the present invention will be described in detail with reference to FIG. 2 under the assumption that the self-moving robot 100 is a cleaning robot.

FIG. 2 is a schematic block diagram of a cleaning robot that is an example of the self-moving robot of FIG. 1. As shown in FIG. 2, the cleaning robot 100 according to the present invention includes a wireless communication module 180, a signal detector 190, and a memory 160, in addition to basic components of the conventional cleaning robot that are described below. The wireless communication module 180 transmits a drive signal for a signal transmission device 200 within a specific range, and transmits and receives data to and from the wireless operating unit 300 and/or the signal transmission device 200 that is driven by the drive signal. The signal detector 190 detects a direction change signal transmitted from the signal transmission device 200. The memory 160 stores an operating program and identification information of the cleaning robot 100.

The basic components of the cleaning robot 100 include an inhaler 110, a dust collector 120, a movement unit 130, a battery 140, a battery level detection circuit 150, and a microprocessor 170. The inhaler 110 includes a dust sensor for detecting dust or other foreign particles in a cleaning area. The inhaler 110 sucks up dust or other foreign particles detected by the dust sensor. The dust collector 120 receives dust or other foreign particles collected by the inhaler 110. The movement unit 130 allows the cleaning robot 100 to move. The battery 140 supplies power to drive the inhaler 110 and the movement unit 130. The battery level detection circuit 150 detects the level of the battery 140 at intervals of a specific period and outputs a charging request signal when the detected battery level is a predetermined level or less. The microprocessor 170 controls the overall operation of the cleaning robot 100.

The inhaler 110, the dust collector 120, the battery 140, and the battery level detection circuit 150 of the basic components of the cleaning robot 100 are known in the art and thus a detailed description thereof is omitted herein.

The memory 160 includes, for example, a nonvolatile memory such as an EEPROM or a flash memory. The memory 160 stores an operating program for operating the cleaning robot 100 and identification information unique to the cleaning robot 100. Access to the operating program and the identification information stored in the memory 160 is controlled by the microprocessor 170.

The wireless communication module 180, which is a type of wireless communication model, receives an operating command transmitted from the wireless operating unit 300 and transmits the received operating command. The wireless communication module 180 transmits an operating- command reception confirmation signal, indicating whether or not an operating command has been received, to the wireless operating unit 300 and also transmits task execution result information of a task, which the cleaning robot 100 has executed according to the received operating command, to the wireless operating unit 300. For example, the task execution result information may include operation information of the cleaning robot 100 such as information indicating that the cleaning robot 100 is executing the task and error information indicating that the cleaning robot 100 has failed to execute the task. The wireless communication module 180 transmits a drive signal for a signal transmission device 200 within a specific range and receives state information of the signal transmission device 200 transmitted from the signal transmission device 200 driven by the drive signal. The wireless communication module 180 also transmits and receives data to and from an accessible external device. This data transmission and reception to and from the external device will be described in detail later.

The signal detector 190 detects a direction change signal, such as an infrared signal having specific directionality, transmitted from the signal transmission device 200 driven by the drive signal and outputs the detected change signal to the microprocessor 170. The signal detector 190 only need to be a detector that can detect direction change signals in a variety of formats transmitted from the signal transmission devices 200. For example, the signal detector 190 may be an infrared sensor if the signal transmission device 200 transmits infrared signals.

The movement unit 130 moves the cleaning robot 100 by driving left and right wheel motors 131 and 132 according to control signals output from the microprocessor 170. The left and right wheel motors 131 and 132 of the movement unit 130 are coupled to left and right wheels to move the cleaning robot 100. The cleaning robot 100 moves back and forth and around according to the rotation speed and direction of the left and right wheel motors 131 and 132.

The microprocessor 170 includes a movement controller 171, a direction change processor 172, a command code extractor 173, a command processor 174, a reception confirmation signal transmitter 175, a state information transmitter 176, an external device accessibility information collector 177, and an external device control processor 178. The movement controller 171 controls the operation of the movement unit 130. The direction change processor 172 outputs a control signal to the movement controller 171 to change the movement direction of the cleaning robot 100 according to a direction change signal output from the signal detector 190. The command code extractor 173 receives and analyzes an operating command transmitted from the wireless operating unit 300 and extracts a command code from the operating command. The command processor 174 drives the cleaning robot 100 according to the command code extracted by the command code extractor 173. The reception confirmation signal transmitter 175 transmits information, indicating whether or not an operating command has been received, to the wireless operating unit 300 through the wireless communication module 180. The state information transmitter 176 receives state information transmitted from the signal transmission device 200 and transmits the state information to the wireless operating unit 300 through the wireless communication module 180. The external device accessibility information collector 177 receives accessibility information of external devices or receives and provides the accessibility information to the wireless operating unit 300. The external device control processor 178 receives an external device control signal including external device identification information from the wireless operating unit 300 and outputs the received external device control signal to an external device corresponding to the identification information.

The movement controller 171 moves the cleaning robot 100 according to a control command output by the operating program of the cleaning robot 100.

The direction change processor 172 receives a direction change signal of a signal transmission device detected by the signal detector 190 and outputs a control signal corresponding to the direction change to the movement controller 171 to prevent the cleaning robot 100 from exiting the cleaning area.

The signal transmission devices 200 are installed along the boundary of a predetermined movement area of the cleaning robot 100 in order to prevent the cleaning robot 100 from exiting the movement area. For example, the signal transmission device 200 is a device that transmits a direction change signal for the cleaning robot 100 such as an infrared signal in a specific direction. An example of the signal transmission device 200 is a beacon. Upon detection of a direction change signal transmitted from a signal transmission device 200, the cleaning robot 100 changes its movement direction so that it is prevented from exiting the movement area.

The operating command transmitted from the wireless operating unit 300 includes identification information and a command code. The command code extractor 173 analyzes an operating command received by the wireless communication module 180, extracts a command code from the operating command, and transmits the extracted command code to the command processor 174.

The command processor 174 controls the operation of the cleaning robot 100 according to the command code extracted by the command code extractor 173. Task execution result information of a task, which the cleaning robot 100 has executed according to the received operating command, is also transmitted to the wireless operating unit 300. For example, the task execution result information may include operation information of the cleaning robot 100 such as information indicating that the cleaning robot 100 is executing the task and error information indicating that the cleaning robot 100 has failed to execute the task.

For example, when a user inputs a command to return the cleaning robot 100 to a charger through the wireless operating unit 300 held by the user, the wireless operating unit 300 transmits an operating command, including a command code corresponding to the input command and identification information of the cleaning robot 100 which is to perform the command, to the wireless command module 180.

The wireless communication module 180 of the cleaning robot 100 receives and outputs the operating command to the microprocessor 170. The command processor 174 in the microprocessor 170 generates an operating command reception confirmation signal indicating that the operating command has been received and transmits it to the wireless operating unit 300 through the wireless communication module 180.

The command code extractor 173 analyzes the received operating command, extracts a return-to-charger command from the operating command, and transmits the return-to-charger command to the command processor 174. The command processor 174 activates a return-to-charger algorithm according to the return-to-charger command transmitted from the command code extractor 173 and outputs a control signal to the movement controller 171 to return the cleaning robot 100 to the charger.

When the cleaning robot 100 has returned to the charger, the command processor 174 transmits task execution result information, which indicates that the cleaning robot 100 has returned to the charger, to the wireless operating unit 300. The wireless operating unit 300 displays the task execution result information received from the command processor 174 to inform the user that the cleaning robot 100 has returned to the charger.

The reception confirmation signal transmitter 175 transmits an operating command reception confirmation signal indicating whether or not an operating command has been received from the wireless operating unit 300 to the wireless operating unit 300 through the wireless communication module 180.

The state information transmitter 176 receives a state signal transmitted from a signal transmission device 200 and transmits the received state signal to the wireless operating unit 300 so that it is provided to the user. Here, the state signal is transmitted within a specific range from the cleaning robot 100. For example, the state signal transmitted from the signal transmission device 200 may include identification information, battery charging information, information indicating the temperature, humidity, or gas leakage status of an area where the signal transmission device 200 is located, and information indicating whether or not the cleaning robot 100 is passing through the area.

The external device accessibility information collector 177 transmits an external device accessibility information request signal in response to an accessibility information request transmitted from the wireless operating unit 300. The external device accessibility information collector 177 receives accessibility information including identification information of an accessible external device transmitted from the external device that can be accessed by the cleaning robot 100 through wireless communication, and transmits the received accessibility information to the wireless operating unit 300 through the wireless communication module 180.

When the user inputs a request to search for an accessible external device using the wireless operating unit 300, the wireless operating unit 300 transmits a corresponding search signal to the cleaning robot 100, and the cleaning robot 100 transmits an accessibility information request signal. External devices that can be accessed by the cleaning robot 100 through wireless communication transmit accessibility information including identification information to the cleaning robot 100. The external device accessibility information collector 177 of the cleaning robot 100 transmits the accessibility information received from the external devices to the wireless operating unit 300. The wireless operating unit 300 stores the accessibility information of the external devices transmitted from the cleaning robot 100.

The external device control processor 178 receives an external device control signal including external device identification information from the wireless operating unit 300 and outputs the received control signal to an external device corresponding to the identification information. For example, when the user inputs a drive control command of an external device, such as an ON/OFF command or a temperature control command of an air conditioner, through the wireless operating unit 300, the wireless operating unit 300 outputs an external device control signal including identification information of the air conditioner to the cleaning robot 100. The external device control processor 178 of the cleaning robot 100 receives and outputs the external device control signal such as the ON/OFF command or the temperature control command to the air conditioner corresponding to the identification information.

The signal transmission devices 200 are installed along the boundary of a predetermined movement area of the cleaning robot 100 in order to prevent the cleaning robot 100 from exiting the movement area. For example, the signal transmission device 200 is a device that transmits a direction change signal for the cleaning robot 100 such as an infrared signal in a specific direction. Upon detection of a direction change signal transmitted from a signal transmission device 200, the cleaning robot 100 changes its movement direction so that it is prevented from exiting the movement area.

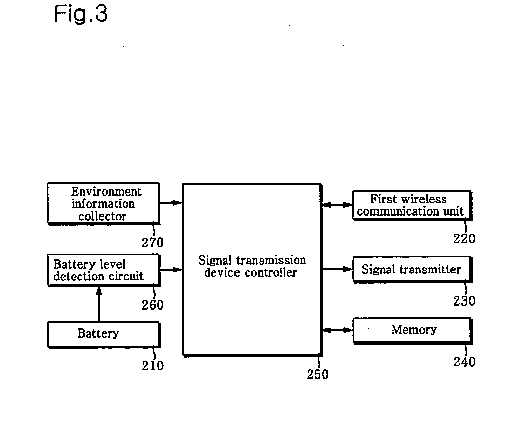

The signal transmission device 200 will now be described in more detail with reference to FIG. 3. FIG. 3 is a schematic block diagram of the signal transmission device of FIG. 1. As shown in FIG. 3, the signal transmission device 200 according to the present invention includes a battery 210, a first wireless communication unit 220, a signal transmitter 230, a memory 240, and a signal transmission device controller 250. The battery 210 supplies power to drive the signal transmission device 200. The first wireless communication unit 220 receives a drive signal transmitted from the self-moving robot 100 and transmits and receives data to and from the self-moving robot 100. The signal transmitter 230 transmits a direction change signal for the self-moving robot 100 in a specific direction. The memory 240 stores identification information of the signal transmission device 200. The signal transmission device controller 250 drives the signal transmission device 200 according to a drive signal received by the first wireless communication unit 220. When the signal transmission device 200 is driven, the signal transmission device controller 250 transmits state information including identification information of the signal transmission device 200 to the self-moving robot 100 through the first wireless communication unit 220 and outputs a control signal to control the operation of the signal transmitter 230.

The battery 210 supplies power to drive the signal transmission device 200. For example, a conventional primary battery or a secondary battery that can be recharged and used for a long time can be used as the battery 210.

The first wireless communication unit 220 is the same type of communication modem as the wireless communication module 180 of the self-moving robot 100. The first wireless communication unit 220 receives a drive signal transmitted within a specific range from the self-moving robot 100 and outputs the received drive signal to the signal transmission device controller 250. The first wireless communication unit 220 also transmits state information output from the signal transmission device controller 250 to the wireless communication module 180 of the self-moving robot 100.

The signal transmitter 230 transmits a directional signal such as infrared light in order to prevent the self-moving robot 100 from exiting a task area where the self-moving robot 100 is to perform a task. For example, the signal transmitter 230 is an infrared light transmitter. When each of the plurality of signal transmission devices 200 is driven, it transmits a direction change signal for the self-moving robot 100 through the signal transmitter 230, and the self-moving robot 100 detects the direction change signal and changes its movement direction according to the detected change signal so that it is prevented from exiting the task area.

For example, the signal transmission device controller 250 can be embodied as an integrated circuit such as a microcontroller. The signal transmission device controller 250 receives a drive signal detected and output by the first wireless communication unit 220 and drives the signal transmission device 200 according to the received drive signal. Here, the signal transmission device controller 250 transmits state information including identification information of the signal transmission device 200 to the self-moving robot 100.

When the self-moving robot 100 has detected the direction change signal and changed its movement direction so that the first wireless communication unit 220 no longer receives the drive signal transmitted within the specific range from the self-moving robot 100, the signal transmission device controller 250 cuts off power to each component of the signal transmission device 200 to stop the operation of each component.

According to an additional aspect of the present invention, the signal transmission device 200 further includes a battery level detection circuit 260 that detects the level of the battery 210 at intervals of a specific period and outputs a charging request signal to the signal transmission device controller 250 when the detected level is a specific level or less.

The battery level detection circuit 260 divides a voltage received from the battery 210, which is embedded in the signal transmission device 200 to supply drive power, by a specific resistance ratio, and determines the level of the battery 210 based on the divided voltage level. When the determined level of the battery 210 is a reference voltage level or less, the battery level detection circuit 260 outputs a charging request signal to the signal transmission device controller 250.

The signal transmission device controller 250 transmits state information including battery charging information to the self-moving robot 100 according to the charging request signal output from the battery level detection circuit 260. The self-moving robot 100 transmits the state information including the battery charging information transmitted from the signal transmission device 200 to the wireless operating unit 300. The wireless operating unit 300 displays, to the user, the battery charging request from the signal transmission device 200.

According to another aspect of the present invention, the signal transmission device 200 further includes an environment information collector 270 that detects environment information including information indicating the temperature, humidity, or gas leakage status of an area where the signal transmission device 200 is located, or information indicating whether or not the self-moving robot 100 is passing through the area.

For example, the environment information collector 270 includes a plurality of sensors such as temperature, humidity, and gas leakage sensors. Environment information detected by the sensors is output to the signal transmission device controller 250. The signal transmission device controller 250 transmits state information including the environment information collected by the environment information collector 270 to the self-moving robot 100.

The self-moving robot 100 transmits the state information including the environment information, received from the signal transmission device 200, to the wireless operating unit 300. The wireless operating unit 300 displays, to the user, the information indicating the temperature, humidity, and gas leakage status of the area where the signal transmission device 200 is located and the information indicating whether or not the self-moving robot 100 is passing through the area, which have been collected by the signal transmission device 200.

Accordingly, the user can easily check a variety of information collected by the self-moving robot 100 through the wireless operating unit 300.

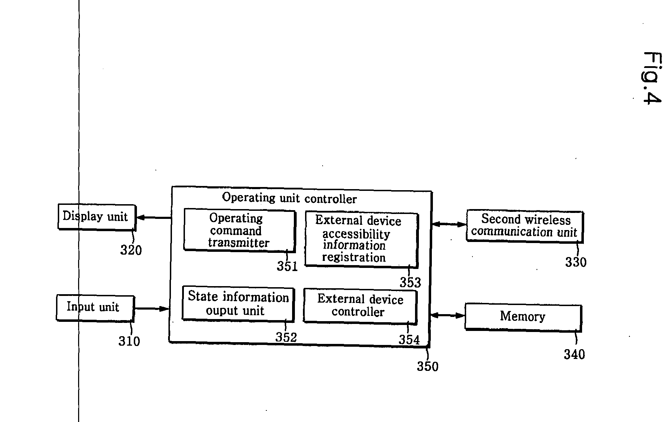

The wireless operating unit 300 is a remote controller provided together with the self-moving robot 100. The wireless operating unit 300 transmits an operating command input by the user to the self-moving robot 100 through wireless communication and displays, to the user, information indicating whether or not the operating command has been received and state information of the signal transmission device 200 which have been transmitted from the self-moving robot 100. The wireless operating unit 300 will now be described in more detail with reference to FIG. 4.

FIG. 4 is a schematic block diagram of the wireless operating unit 300 of FIG. 1. The wireless operating unit 300 according to the present invention includes an input unit 310, a display unit 320, a second wireless communication unit 330, a memory 340, and an operating unit controller 350. The input unit 310 receives an operating command from the user. The display unit 320 displays the operating command received from the input unit 310, information indicating whether or not an operating command has been received and state information of the signal transmission device 200 which have been transmitted from the self-moving robot 100. The second wireless communication unit 330 transmits and receives data to and from the self-moving robot 100. The memory 340 stores accessibility information of external devices transmitted from the external device accessibility information collector 177 of the self-moving robot 100 through the second wireless communication unit 330. The operating unit controller 350 controls the overall operation of the wireless operating unit 300.

The input unit 310 includes a plurality of keys/buttons such as number, character and function keys. As the user presses keys/buttons on the input unit 310 to input an operating command, the input unit 310 generates and outputs signals detected from the pressed keys/buttons. For example, the display unit 320 is embodied as a display device such as an LCD, and displays, to the user, an operating command input through the input unit 310, an operating command reception confirmation signal or task execution result information transmitted from the self-moving robot 100, and state information of the signal transmission device 200 transmitted therefrom which includes battery charging information of the signal transmission device 200, information indicating the temperature, humidity, and gas leakage status of an area where the signal transmission device 200 is located, information indicating whether or not the self-moving robot 100 is passing through the area, and identification information. Such information signals displayed to the user may include graphic data including, for example, characters or avatars. The configuration of the input unit 310 and the display unit 320 is known in the art and thus a detailed description thereof is omitted herein.

The second wireless communication unit 330 is the same type of communication modem as the wireless communication module 180 of the self-moving robot 100. The second wireless communication unit 330 transmits an operating command received from the user through the input unit 310 to the self-moving robot 100. The second wireless communication unit 330 also receives and outputs, to the operating unit controller 350, an operating command reception confirmation signal and task execution result information transmitted from the self-moving robot 100, or state information of the signal transmission device 200 transmitted therefrom which includes battery charging information of the signal transmission device 200, information indicating the temperature, humidity, and gas leakage status of an area where the signal transmission device 200 is located, information indicating whether or not the self-moving robot 100 is passing through the area, and identification information. The second wireless communication unit 330 receives accessibility information of an accessible external device transmitted from the external device accessibility information collector 177 of the self-moving robot 100 and transmits the received accessibility information to the operating unit controller 350.

For example, the memory 340 can be embodied as a nonvolatile memory such as an EEPROM or a flash memory. The memory 340 stores accessibility information of external devices transmitted from the external device accessibility information collector 177 of the self-moving robot 100 through the second wireless communication unit 330. Access to the external device accessibility information is controlled by the operating unit controller 350.

For example, the operating unit controller 350 can be embodied as an integrated circuit such as a microcontroller. The operating unit controller 350 includes an operating command transmitter 351, a state information output unit 352, an external device accessibility identification information registration unit 353, and an external device controller 354. The operating command transmitter 351 allows an operating command received from the input unit 310 to be transmitted to the wireless communication module 180 of the self-moving robot 100 through the second wireless communication module 330. The operating command transmitter 351 receives information indicating whether or not an operating command has been received and task execution result information of a task corresponding to the operating command, transmitted from the command processor 174 of the self-moving robot 100, and displays the received information on the display unit 320. The state information output unit 352 generates display information corresponding to state information of the signal transmission device 200 transmitted from the self-moving robot 100 and outputs the generated display information to the display unit 320. The external device accessibility information registration unit 353 receives and stores external device accessibility information including external device identification information provided by the self-moving robot 100. The external device controller 354 receives an operating command for an external device input by the user and generates and transmits an external device control signal including identification information of the external device to the self-moving robot 100.

More specifically, the operating command transmitter 351 receives a user command from the input unit 310 and converts the user command into a corresponding command code. The operating command transmitter 351 generates an operating command including the command code and identification information of the self-moving robot 100 to which the command is to be transmitted, and transmits the generated operating command to the self-moving robot 100 through the second wireless communication unit 330. The operating command transmitter 351 receives information indicating whether or not the operating command has been received and task execution result information of a task corresponding to the operating command from the command processor 174 of the self-moving robot 100 through the second wireless communication unit 330, and displays the received information on the display unit 320. For example, the task execution result information may include operation information of the cleaning robot 100 such as information indicating that the cleaning robot 100 is executing the task and error information indicating that the cleaning robot 100 has failed to execute the task.

The state information output device 352 generates display information corresponding to state information of the signal transmission device 200 transmitted from the self-moving robot 100 which includes battery charging information of the signal transmission device 200, information indicating the temperature, humidity, and gas leakage status of an area where the signal transmission device 200 is located, information indicating whether or not the self-moving robot 100 is passing through the area, and identification information, and outputs the display information to the display unit 320. For example, the state information output from the state information output unit 352 to the display unit 320 may include graphic data such as characters, avatars, and images.

The external device accessibility information registration unit 353 receives external device accessibility information including external device identification information collected by the external device accessibility information collector 177 of the self-moving robot 100 and stores the received external device accessibility information in the memory 340. If the user inputs a command to search for an external device through the wireless operating unit 300, the wireless operating unit 300 outputs the external device search command to the self-moving robot 100.

The external device accessibility information collector 177 of the self-moving robot 100 transmits an external device accessibility information request signal in response to an accessibility information request transmitted from the wireless operating unit 300. The external device accessibility information collector 177 receives accessibility information including identification information of an accessible external device transmitted from the external device that can be accessed by the self-moving robot 100 through wireless communication, and transmits the received accessibility information to the wireless operating unit 300 through the wireless communication module 180.

Without the request signal from the wireless operating unit 300, accessibility information of an external device may also be transmitted to the accessibility information collector 177 of the self-moving robot 100 when the external device is powered on. When an external device is powered on, the accessibility information collector 177 of the self-moving robot 100 receives accessibility information including identification information of the external device and transmits the accessibility information to the accessibility information registration unit 353 of the wireless operating unit 300. The accessibility information registration unit 353 receives and stores the accessibility information in the memory 340.

Once it is registered and stored in the memory 340, the accessibility information can be used constantly. When an external device is added, it is possible to control both the self-moving robot 100 and the external device through the single wireless operating unit 300 without requiring a separate remote controller.

The external device controller 354 transmits a drive control command of the external device, input by the user through the input unit 310, to the external device control processor 178 of the self-moving robot 100. For example, when the user inputs a drive control command of an external device such as an ON/OFF command or a temperature control command of an air conditioner, the external device controller 354 transmits a control signal including identification information of the air conditioner and a command code corresponding to the air conditioner operation command to the external device control processor 178 of the self-moving robot 100.

The external device control processor 178 of the self-moving robot 100 receives an external device control signal including identification information of an external device transmitted from the external device controller 354 of the wireless operating unit 300 and outputs a control signal to the external device corresponding to the identification information. Specifically, when the external device control processor 178 of the self-moving robot 100 receives a control signal such as an ON/OFF command or a temperature control command of an air conditioner, the external device control processor 178 outputs the received control signal to the air conditioner corresponding to identification information included in the control signal.

According to an aspect of the present invention, the self-moving robot 100, the signal transmission device 200, and the wireless operating unit 300 in the home networking system of the present invention communicate according to a Zigbee communication protocol. The self-moving robot 100 and a plurality of external devices also communicate according to the Zigbee communication protocol. Zigbee is a standard specification for home automation and wireless data networks and is characterized by low power consumption, low cost, and low data transfer rate.

Zigbee transmits data at a rate of 20-250kbps within a 30m radius and connects up to 255 devices to a single wireless network. As Zigbee can be implemented as a small size, low power, and low cost module, Zigbee is attracting lots of attention as a core technology for ubiquitous computing such as home networking.

Since such Zigbee communication modules have a router function, contrary to general remote controllers that use infrared or RF communications, the self-moving robot 100, the signal transmission device 200, and the wireless operating unit 300 having the Zigbee modules can implement an ad-hoc network, together with a variety of external devices having Zigbee communication modules.

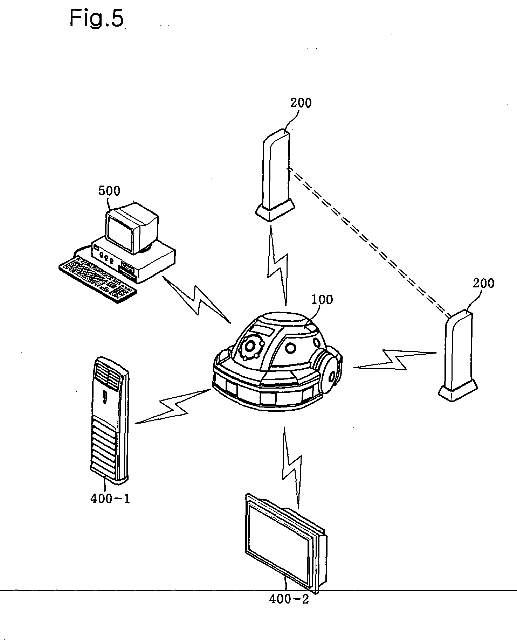

FIG. 5 schematically shows a home networking system using a self-moving robot according to another embodiment of the present invention. As shown in FIG. 5, the home networking system includes a self-moving robot 100, a plurality of signal transmission devices 200, and a host device 500. The self-moving robot 100 receives a wirelessly transmitted operating command, transmits information indicating whether or not the operating command has been received, and performs a task according to the received operating command. The self-moving robot 100 also transmits a drive signal within a specific range and outputs a control signal to an external device that the self-moving robot 100 can access. Each of the plurality of the signal transmission devices detects a drive signal transmitted from the self-moving robot 100 and is driven according to the drive signal. When a signal transmission device is driven, the signal transmission device transmits its state information, including identification information of the signal transmission device, to the self-moving robot 100, and transmits a direction change signal for the self-moving robot 100 in a specific direction. The host device 500 is connected to a user terminal held by a remote user through a Public Switched Telephone Network (PSTN). The host device 500 receives an operating command input through the user terminal and transmits the operating command to the self-moving robot 100. The host device 500 also transmits information indicating whether or not the operating command has been received and/or state information of the signal transmission device 200, which have been transmitted from the self-moving robot 100, to the user terminal through the PSTN.

The self-moving robot 100 performs a task while automatically moving within a specific area according to an installed program. A typical commercialized example of the self-moving robot 100 is a cleaning robot that sucks up dust or other foreign particles while moving freely within a predetermined area.

The self-moving robot 100 according to the embodiment of FIG. 5 includes a wireless communication module 180, a signal detector 190, a movement unit 130, and a microprocessor 170 as shown in FIG. 2. The wireless communication module 180 transmits a drive signal for a signal transmission device 200 within a specific range, and transmits and receives data to and from the host device 500 and/or the signal transmission device 200 that is driven by the drive signal. The signal detector 190 detects a direction change signal transmitted from the signal transmission device 200. The movement unit 130 allows the self-moving robot 100 to move. The microprocessor 170 controls the overall operation of the self-moving robot 100. The microprocessor 170 includes a movement controller 171, a direction change processor 172, a command code extractor 173, a command processor 174, a reception confirmation signal transmitter 175, a state information transmitter 176, an external device accessibility information collector 177, and an external device control processor 178. The movement controller 171 controls the operation of the movement unit 130 according to a control signal. The direction change processor 172 outputs a control signal to the movement controller 171 to change the movement direction of the self-moving robot 100 according to a direction change signal output from the signal detector 190. The command code extractor 173 receives and analyzes an operating command transmitted from the host device 500 and extracts a command code from the operating command. The command processor 174 drives the self-moving robot 100 according to the command code extracted by the command code extractor 173. The reception confirmation signal transmitter 175 transmits information, indicating whether or not an operating command has been received, to the host device 500 through the wireless communication module 180. The state information transmitter 176 receives state information transmitted from the signal transmission device 200 and transmits the state information to the host device 500 through the wireless communication module 180. The external device accessibility information collector 177 receives accessibility information of external devices or receives and provides the accessibility information to the host device 500. The external device control processor 178 receives an external device control signal including external device identification information from the host device 500 and outputs the received external device control signal to an external device corresponding to the identification information.

The signal transmission devices 200 are installed along the boundary of a predetermined movement area of the self-moving robot 100 in order to prevent the self-moving robot 100 from exiting the movement area. For example, the signal transmission device 200 is a device that transmits a direction change signal for the self-moving robot 100 such as an infrared signal in a specific direction. Upon detection of a direction change signal transmitted from a signal transmission device 200, the self-moving robot 100 changes its movement direction so that it is prevented from exiting the movement area.

The signal transmission device 200 according to the present invention includes a battery 210, a first wireless communication unit 220, a signal transmitter 230, and a signal transmission device controller 250 as shown in FIG. 3. The battery 210 supplies power to drive the signal transmission device 200. The first wireless communication unit 220 receives a drive signal transmitted from the self-moving robot 100 and transmits and receives data to and from the self-moving robot 100. The signal transmitter 230 transmits a direction change signal for the self-moving robot 100 in a specific direction. The signal transmission device controller 250 drives the signal transmission device 200 according to a drive signal received by the first wireless communication unit 220. When the signal transmission device 200 is driven, the signal transmission device controller 250 transmits state information including identification information of the signal transmission device 200 to the self-moving robot 100 through the first wireless communication unit 220 and outputs a control signal to control the operation of the signal transmitter 230.

According to an additional aspect of the present invention, the signal transmission device 200 further includes a battery level detection circuit 260 that detects the level of the battery 210 at intervals of a specific period and outputs a charging request signal to the signal transmission device controller 250 when the detected level is a specific level or less.

The battery level detection circuit 260 divides a voltage received from the battery 210, which is embedded in the signal transmission device 200 to supply drive power, by a specific resistance ratio, and determines the level of the battery 210 based on the divided voltage level. When the determined level of the battery 210 is a reference voltage level or less, the battery level detection circuit 260 outputs a charging request signal to the signal transmission device controller 250.

The signal transmission device controller 250 transmits state information including battery charging information to the self-moving robot 100 according to the charging request signal output from the battery level detection circuit 260. The self-moving robot 100 transmits the state information including the battery charging information transmitted from the signal transmission device 200 to the host device 500. The host device 500 provides the battery charging request from the signal transmission device 200 to the user through the user's terminal such as a telephone or computer connected to the host device 500 via a network such as the PSTN or the Internet.

According to another aspect of the present invention, the signal transmission device 200 further includes an environment information collector 270 that detects environment information including information indicating the temperature, humidity, or gas leakage status of an area where the signal transmission device 200 is located, or information indicating whether or not the self-moving robot 100 is passing through the area.

For example, the environment information collector 270 includes a plurality of sensors such as temperature, humidity, and gas leakage sensors. Environment information detected by the sensors is output to the signal transmission device controller 250. The signal transmission device controller 250 transmits state information including the environment information collected by the environment information collector 270 to the self-moving robot 100.

The self-moving robot 100 transmits the state information including the environment information, received from the signal transmission device 200, to the host device 500. The host device 500 provides the battery charging request from the signal transmission device 200 to the user through the user's terminal such as a telephone or computer connected to the host device 500 via a network such as the PSTN or the Internet.

A more detailed description of the self-moving robot 100 and the signal transmission device 200 of the home networking system of FIG. 5 is omitted since they are similar to the self-moving robot 100 and the signal transmission device 200 of the home networking system of FIG. 1 that have been described above with reference to FIGS. 2 and 3.

In the home networking system using the self-moving robot according to the embodiment of FIG. 5, the function of the wireless operating unit 300 extends to the Internet and the PSTN so that the self-moving robot 100 and external devices connected thereto via a network can be controlled from outdoor locations.

A description will now be given of the configuration and function of the host device 500 that is a main component of the home network system according to the embodiment of FIG. 5.

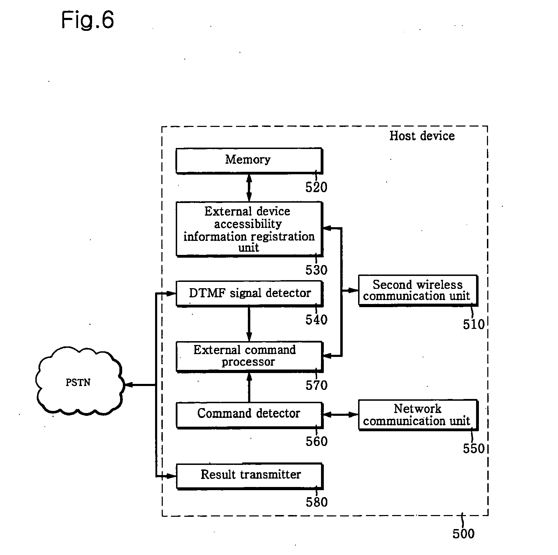

FIG. 6 is a schematic block diagram of the host device of FIG. 5. As shown in FIG. 6, the host device 500 of the home networking system using the self-moving robot according to the present invention includes a second wireless communication unit 510, a memory 520, an external device accessibility information registration unit 530, a Dual Tone Multi-Frequency (DTMF) signal detector 540, a network communication unit 550, a command detector 560, an external command processor 570, and a result transmitter 580. The second wireless communication unit 510 transmits and receives data to and from the self-moving robot 100 through wireless communication. The memory 520 stores accessibility information of accessible external devices transmitted from the external device accessibility information collector 177 of the self-moving robot 100 through the second wireless communication unit 510. The external device accessibility information registration unit 530 transmits an external device search command to the self-moving robot 100, receives external device accessibility information including external device identification information that the self-moving robot 100 provides in response to the external device search command, and stores the received external device accessibility information in the memory 520. The DTMF signal detector 540 detects a DTMF signal input from an external user telephone through a Public Switched Telephone Network (PSTN). The network communication unit 550 transmits and receives data to and from an external user terminal through the Internet. The command detector 560 detects an operating command input from the external user terminal through the network communication unit 550. The external command processor 570 converts a DTMF signal detected by the_ DTMF signal detector 540 or an operating command detected by the command detector 560 into a control signal suitable for the self-moving robot 100 and transmits the control signal to the self-moving robot 100 through the second wireless communication unit 510. The result transmitter 580 transmits, to a user telephone or a user terminal, information indicating whether or not an operating command has been received, task execution result information, and state information of a signal transmission device 200 driven by the self-moving robot 100, which have been transmitted from the wireless communication module 180 of the self-moving robot 100.

The second wireless communication unit 510 is the same type of communication modem as the wireless communication module 180 of the self-moving robot 100. The second wireless communication unit 510 transmits an operating command output from the external command processor 570 to the self-moving robot 100. The second wireless communication unit 510 also receives and outputs, to the result transmitter 580, an operating command reception confirmation signal and task execution result information transmitted from the self-moving robot 100, or state information of the signal transmission device 200 transmitted therefrom which includes battery charging information of the signal transmission device 200, information indicating the temperature, humidity, and gas leakage status of an area where the signal transmission device 200 is located, information indicating whether or not the self-moving robot 100 is passing through the area, and identification information. The second wireless communication unit 510 receives accessibility information of an accessible external device transmitted from the external device accessibility information collector 177 of the self-moving robot 100 and transmits the received accessibility information to the external device accessibility information registration unit 530.

For example, the memory 520 can be embodied as a nonvolatile memory such as an EEPROM or a flash memory. The memory 520 stores accessibility information of external devices transmitted from the external device accessibility information collector 177 of the self-moving robot 100 through the second wireless communication unit 510.

The external device accessibility information registration unit 530 receives external device accessibility information including external device identification information collected by the external device accessibility information collector 177 of the self-moving robot 100 and stores the received external device accessibility information in the memory 520. If the user inputs a command to search for an external device through the PSTN or the Internet, the external device accessibility information registration unit 530 outputs the external device search command to the self-moving robot 100.

The external device accessibility information collector 177 of the self-moving robot 100 transmits an external device accessibility information request signal in response to an accessibility information request transmitted from the host device 500. The external device accessibility information collector 177 receives accessibility information including identification information of an accessible external device transmitted from the external device that can be accessed by the self-moving robot 100 through wireless communication, and transmits the received accessibility information to the external device accessibility information registration unit 530 of the host device 500 through the wireless communication module 180.

Without the request signal from the host device 500, accessibility information of an external device may also be transmitted to the accessibility information collector 177 of the self-moving robot 100 when the external device is powered on. When an external device is powered on, the accessibility information collector 177 of the self-moving robot 100 receives accessibility information including identification information of the external device and transmits the accessibility information to the accessibility information registration unit 530 of the host device 500. The accessibility information registration unit 530 receives and stores the accessibility information in the memory 520.

Once it is registered and stored in the memory 520, the accessibility information can be used constantly.

The DTMF signal detector 540 detects a DTMF signal, which has been generated from an external telephone by a remote user and then transmitted through the PSTN, and transmits the detected DTMF signal to the external command processor 570.

For example, the network communication unit 550 can be embodied as a network modem such as an Ethernet card that can be connected to the Internet. The network communication unit 550 transmits and receives data to and from an external user terminal over the Internet. The command detector 560 detects an operating command transmitted from the user terminal through the network communication unit 550 and outputs the detected operating command to the external command processor 570.

The external command processor 570 converts the DTMF signal detected by the DTMF signal detector 540 or the operating command detected by the command detector 560 into an operating command for the self-moving robot 100 and transmits it to the self-moving robot 100 through the second wireless communication unit 510.

The result transmitter 580 transmits, to a user telephone or a user terminal, information indicating whether or not an operating command has been received and state information of a signal transmission device 200 driven by the self-moving robot 100, which have been transmitted from the wireless communication module 180 of the self-moving robot 100.

The result transmitter 580 receives a state signal transmitted from a signal transmission device 200 and transmits the received state signal to the user telephone or the user terminal so that it is provided to the user. Here, the state signal is transmitted within a specific range from the cleaning robot 100. The result transmitter 580 of the host device 500 may use an Automated Response System (ARS) to transmit the received state information to the user telephone and the user terminal.

For example, the state signal transmitted from the signal transmission device 200 may include identification information, battery charging information, information indicating the temperature, humidity, or gas leakage status of an area where the signal transmission device 200 is located, and information indicating whether or not the self-moving robot 100 is passing through the area.

Task execution result information of a task, which the cleaning robot 100 has executed according to the received operating command, is also transmitted to the user telephone or the user terminal. For example, the task execution result information may include operation information of the self-moving robot 100 such as information indicating that the self-moving robot 100 is executing the task and error information indicating that the self-moving robot 100 has failed to execute the task.

The host device 500 and the self-moving robot 100 communicate data with each other in the following manner. When receiving an incoming call, the host device 500 detects the incoming call and outputs an answering voice message. If the user requests use of a remote control function of the self-moving robot 100, a controller of the host device 500 requests user authentication information such as a password from the user.

If it is determined through the user authentication information that the user is an authorized user, the self-moving robot 100 outputs a remote control guide message of the self-moving robot 100. The user presses a button on a telephone to produce a DTMF signal and to transmit it to the host device 500 in a residence using the PSTN. The host device 500 analyzes an operating command of the self-moving robot 100 from the DTMF signal transmitted from the telephone, and transmits the operating command to the self-moving robot 100 through the Zigbee communication protocol. The self-moving robot 100 performs an operation according to a received control signal.

The command detector 560 of the host device 500 also detects an operating command transmitted from a user terminal over the Internet and outputs the detected operating command to the external command processor 570. For example, the host device 500 provided in a residence has unique identification information such as an IP address, and it is possible to connect to the host device 500 through a web site provided by a service provider of the self-moving robot 100 and the host device 500. The external command processor 570 receives and converts an operating command detected by the command detector 560 into an operating command for the self-moving robot 100 and transmits it to the self-moving robot 100 through the second wireless communication unit 510.

As is apparent from the above description, in a home networking system using a self-moving robot according to the present invention, an operating command input through a wireless operating unit is transmitted via the self-moving robot to an external device that the self-moving robot can access through a wireless network, so that a number of external devices can be controlled using the single wireless operating unit, which is provided together with the self-moving robot, without establishing a separate network.

In addition, through a host device, the user can control a self-moving robot in a residence from outdoor locations using a user telephone such as a fixed-line telephone or a mobile phone (or a mobile communication terminal) or using a user terminal connected via a network such as the Internet and can also control the operation of external devices, which the self-moving robot can access through a wireless network, without installation of any separate connection.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A home networking system using a self-moving robot, the home networking system comprising:
at least one external device;
a self-moving robot for executing a task corresponding to a wirelessly received operating command, transmitting a drive signal within a specific range, and outputting a control signal to an accessible external device; and
a wireless operating unit for wirelessly transmitting an operating command input by a user to the self-moving robot, and outputting a control signal for controlling an accessible external device to the accessible external device, accessibility information of the accessible external device being provided from the self-moving robot.

2. The home networking system according to claim 1, further comprising:
a plurality of signal transmission devices, each of which detects a drive signal transmitted from the self-moving robot, and is driven according to the drive signal, transmits state information including identification information of the signal transmission device to the self-moving robot when the signal transmission device is driven, and transmits a direction change signal for the self-moving robot in a specific direction.

3. The home networking system according to claim 2, wherein the self-moving robot includes:
a wireless communication module for transmitting and receiving data to and from the wireless operating unit and/or the signal transmission device;
a signal detector for detecting the direction change signal transmitted from the signal transmission device; and
a microprocessor for controlling overall operations of the self-moving robot, including an operation for changing the direction of the self-moving robot, an operation for performing communication with the wireless operating unit and/or the signal transmission device, and an operation for performing communication with the external device.

4. The home networking system according to claim 3, wherein the microprocessor includes:
a movement controller for controlling movement of the self-moving robot;
a direction change processor for outputting a control signal for allowing the self-moving robot to change a movement direction thereof to the movement controller according to a direction change signal output from the signal detector;
a command code extractor for receiving and analyzing an operating command transmitted from the wireless operating unit and extracting a command code from the operating command;
a command processor for driving the self-moving robot according to the command code extracted by the command code extractor and outputting task execution result information to the wireless operating unit; and
a reception confirmation signal transmitter for transmitting information, indicating whether or not the operating command has been received, to the wireless operating unit through the wireless communication module.

5. The home networking system according to claim 4, wherein the microprocessor further includes:
a state information transmitter for receiving state information transmitted from the signal transmission device and transmitting the received state information to the wireless operating unit through the wireless communication module;
an external device accessibility information collector for receiving accessibility information of an accessible external device according to an external device search command from the wireless operating unit or receiving and providing the accessibility information to the wireless operating unit; and
an external device control processor for receiving an external device control signal including identification information of an external device transmitted from the wireless operating unit and outputting the external device control signal to the external device corresponding to the identification information.

6. The home networking system according to any of claims 2 to 5, wherein the signal transmission device includes:
a first wireless communication unit for receiving a drive signal transmitted from the self-moving robot and transmitting and receiving data to and from the self-moving robot;
a signal transmitter for transmitting a direction change signal for the self-moving robot in a specific direction; and
a signal transmission device controller for driving the signal transmission device according to the drive signal, transmitting state information including identification information of the signal transmission device to the self-moving robot when the signal transmission device is driven, and controlling overall operations of the signal transmission device.

7. The home networking system according to claim 6, wherein the signal transmission device further includes a battery level detection circuit for detecting the level of a battery of the signal transmission device at intervals of a specific period and outputting a charging request signal to the signal transmission device controller when the detected battery level is a predetermined level or less, and
wherein the signal transmission device controller transmits state information including battery charging information to the self-moving robot according to the charging request signal output from the battery level detection circuit.

8. The home networking system according to claim 6 or 7, wherein the signal transmission device further includes an environment information collector that detects environment information including at least one of information indicating temperature of an area where the signal transmission device is located, information indicating humidity thereof, and information indicating whether or not the self-moving robot is passing through the area, and
wherein the signal transmission device controller transmits state information including environment information collected by the environment information collector to the self-moving robot.

9. The home networking system according to any of claims 2 to 8, wherein the wireless operating unit includes:
an input unit for receiving an operating command from a user;
a display unit for displaying an operating command received from the input unit, and information indicating whether or not an operating command has been received and state information of the signal transmission device, both of which have been transmitted from the self-moving robot;
a second wireless communication unit for transmitting and receiving data to and from the self-moving robot; and
an operating unit controller for controlling overall operations of the wireless operating unit.

10. The home networking system according to claim 9, wherein the operating unit controller includes:
an operating command transmitter for allowing an operating command received from the input unit to be transmitted to the self-moving robot and displaying information indicating whether or not an operating command has been received and task execution result information of a task corresponding to the operating command, both of which have been received from the self-moving robot, on the display unit;
a state information output unit for generating display information corresponding to state information of the signal transmission device received from the self-moving robot and outputting the generated display information to the display unit;
an external device accessibility information registration unit for transmitting an external device search command to the self-moving robot and receiving and storing external device accessibility information provided by the self-moving robot;
an external device controller for generating an external device control signal according to an external device operating command input by the user and transmitting the external device control signal to the self-moving robot.

11. A home networking system using a self-moving robot, the home networking system comprising:
at least one external device;
a self-moving robot for executing a task corresponding to a wirelessly received operating command, transmitting a drive signal within a specific range, and outputting a control signal to an accessible external device; and
a host device connected to a user terminal through a Public Switched Telephone Network (PSTN), the host device transmitting an operating command input through the user terminal to the self-moving robot, and transmitting information received from the self-moving robot, which indicates whether or not the operating command has been received, to the user terminal.

12. The home networking system according to claim 11, further comprising:
a plurality of signal transmission devices, each of which detects a drive signal transmitted from the self-moving robot, and is driven according to the drive signal, transmits state information including identification information of the signal transmission device to the self-moving robot when the signal transmission device is driven, and transmits a direction change signal for the self-moving robot in a specific direction.

13. The home networking system according to claim 12, wherein the self-moving robot includes:
a wireless communication module for transmitting and receiving data to and from the host device and/or the signal transmission device;
a signal detector for detecting the direction change signal transmitted from the signal transmission device; and
a microprocessor for controlling overall operations of the self-moving robot, including an operation for changing the direction of the self-moving robot, an operation for performing communication with the host device and/or the signal transmission device, and an operation for performing communication with the external device.

14. The home networking system according to claim 13, wherein the microprocessor includes:
a movement controller for controlling movement of the self-moving robot;
a direction change processor for outputting a control signal for allowing the self-moving robot to change a movement direction thereof to the movement controller according to a direction change signal output from the signal detector;
a command code extractor for receiving and analyzing an operating command transmitted from the host device and extracting a command code from the operating command;
a command processor for driving the self-moving robot according to the command code extracted by the command code extractor and outputting task execution result information to the host device; and
a reception confirmation signal transmitter for transmitting information, indicating whether or not the operating command has been received, to the host device through the wireless communication module.

15. The home networking system according to claim 14, wherein the microprocessor further includes:
a state information transmitter for receiving state information transmitted from the signal transmission device and transmitting the received state information to the host device through the wireless communication module;
an external device accessibility information collector for receiving accessibility information of an accessible external device or receiving and providing the accessibility information to the host device; and
an external device control processor for receiving an external device control signal including identification information of an external device transmitted from the host device and outputting the external device control signal to the external device corresponding to the identification information.

16. The home networking system according to any of claims 12 to 15, wherein the signal transmission device includes:
a first wireless communication unit for receiving a drive signal transmitted from the self-moving robot and transmitting and receiving data to and from the self-moving robot;
a signal transmitter for transmitting a direction change signal for the self-moving robot in a specific direction; and
a signal transmission device controller for driving the signal transmission device according to the drive signal, transmitting state information including identification information of the signal transmission device to the self-moving robot when the signal transmission device is driven, and controlling overall operations of the signal transmission device.

17. The home networking system according to claim 16, wherein the signal transmission device further includes a battery level detection circuit for detecting the level of a battery of the signal transmission device at intervals of a specific period and outputting a charging request signal to the signal transmission device controller when the detected battery level is a predetermined level or less, and
wherein the signal transmission device controller transmits state information including battery charging information to the self-moving robot according to the charging request signal output from the battery level detection circuit.

18. The home networking system according to claim 16 or 17, wherein the signal transmission device further includes an environment information collector that detects environment information including at least one of information indicating temperature of an area where the signal transmission device is located, information indicating humidity thereof, and information indicating whether or not the self-moving robot is passing through the area, and
wherein the signal transmission device controller transmits state information including environment information collected by the environment information collector to the self-moving robot.

19. The home networking system according to any of claims 12 to 18, wherein the host device includes:
a second wireless communication unit for transmitting and receiving data to and from the self-moving robot through wireless communication;
an external device accessibility information registration unit for transmitting an external device search command to the self-moving robot and receiving and storing external device accessibility information provided by the self-moving robot;
a Dual Tone Multi-Frequency (DTMF) signal detector for detecting a DTMF signal input from an external user telephone through a Public Switched Telephone Network (PSTN);
a network communication unit for transmitting and receiving data to and from an external user terminal through the Internet; and
a command detector for detecting an operating command input from the external user terminal through the network communication unit.

20. The home networking system according to claim 19, wherein the host device further includes:
an external command processor for converting a DTMF signal detected by the DTMF signal detector or an operating command detected by the command detector into a control signal suitable for the self-moving robot and transmitting the control signal to the self-moving robot; and
a result transmitter for transmitting, to the user telephone or the user terminal, information indicating whether or not an operating command has been received and state information of a signal transmission device driven by the self-moving robot, both of which have been transmitted from the self-moving robot.

21. A method of controlling a self-moving robot by using a home networking system according to any of claims 1 to 20.
